# FASCICULE DE BREVET EUROPEEN

(11) **EP 1 529 471 B1**
(45) Date de publication et mention de la délivrance du brevet: **23.08.2006**
(21) Numéro de dépôt: 04356160.4
(22) Date de dépôt: 30.09.2004
(51) Int. Cl.: A47J 43/07

(54) **Pied de mixage et mixeur menager de type plongeant muni d'un tel pied de mixage**
Stabmixer und eintauchender Haushaltsmischer mit einem solchen Stabmixer
Mixing rod and domestic mixing device of the immersing type with such a mixing rod

(30) Priorité: 14.10.2003 FR 0311968
(43) Date de publication de la demande: 11.05.2005
(73) Titulaire: SEB S.A., 69130 Ecully (FR)
(72) Inventeur: Hamelin, Franck, 50490 Saint Sauveur Lendelin (FR)
(74) Mandataire: Kiehl, Hubert

(56) Documents cités:
- EP-A- 1 232 712
- DE-B- 1 107 907
- DE-B- 1 185 345
- FR-A- 2 553 278
- GB-A- 765 427
- US-A1- 2002 034 121

## Description

La présente invention concerne le domaine technique général des mixeurs ménagers du type plongeant et se rapporte plus particulièrement à un pied de mixage.

De tels pieds de mixage sont bien connus et utilisés couramment. Ils sont accouplés à un boîtier renfermant un moteur et comprennent un fût cylindrique dont la partie inférieure comporte une cloche renfermant un outil de mixage solidaire d'un arbre dont l'extrémité supérieure est accouplée à un arbre de sortie du moteur. Entraîné à grande vitesse, l'outil est plongé à l'intérieur des aliments à préparer et il coupe, mélange, émulsionne, etc. Le document EP-1232712 décrit un pied de mixage selon le préambule de la revendication 1.

Il est intéressant pour les appareils haut de gamme de réaliser le pied de mixage dans un matériau métallique, tel que l'acier inox, un tel matériau présentant l'avantage de posséder une grande rigidité, une bonne résistance à la chaleur et un aspect valorisant.

Toutefois, un pied de mixage en acier inox présente l'inconvénient de nécessiter une attention particulière de l'utilisateur lorsque ce dernier souhaite utiliser le pied de mixage dans un récipient au revêtement fragile, tel une casserole munie d'un revêtement anti-adhésif, sans endommager ce dernier. En effet, le matériau de la cloche étant d'une grande dureté, le risque que la cloche raye le revêtement du récipient lorsqu'elle vient au contact de ce dernier est très important.

L'invention qui suit vise à pallier ces inconvénients.

Le but de l'invention est atteint par un pied de mixage destiné à s'accoupler avec un boîtier renfermant un moteur, le pied de mixage comprenant un fût dont la partie inférieure comporte une cloche renfermant un outil de mixage entraîné en rotation par ledit moteur, caractérisé en ce que la cloche comporte un bord inférieur recouvert d'un élément de protection réalisé dans un matériau dont la dureté est inférieure à la dureté du matériau formant la cloche.

Une telle caractéristique présente l'avantage d'offrir une surface venant prioritairement au contact du récipient qui est dans un matériau moins agressif que celui constituant la cloche, ce qui permet de réduire les risques de détérioration du récipient.

Selon une autre caractéristique de l'invention, la cloche est en acier inox.

Une telle caractéristique présente l'avantage de procurer un aspect valorisant au pied de mixage.

Selon une autre caractéristique de l'invention, le fût du pied de mixage est en acier inox.

Une telle caractéristique présente l'avantage de procurer une grande rigidité et un bel aspect au pied de mixage.

Selon une autre caractéristique de l'invention, l'élément de protection est en matière plastique.

Une telle caractéristique permet de réaliser l'élément de protection à faible coût.

Selon une autre caractéristique de l'invention, l'élément de protection est surmoulé sur la cloche.

Une telle caractéristique permet d'obtenir un bon accrochage de l'élément de protection sur la cloche.

Selon encore une autre caractéristique de l'invention, la partie de la cloche recouverte par l'élément de protection comporte un état de surface spécifique favorisant l'accrochage de l'élément de protection.

Une telle caractéristique permet de renforcer l'accrochage de l'élément de protection sur la cloche en réalisant par exemple des aspérités sur la surface de la cloche recouverte par l'élément de protection.

Selon encore une autre caractéristique de l'invention, la partie de la cloche recouverte par l'élément de protection comporte des ouvertures.

Une telle caractéristique permet d'obtenir des ponts de liaison au travers des ouvertures lors du surmoulage de l'élément de protection, ces ponts de liaison constituant des points d'ancrage de l'élément de protection.

Selon une autre caractéristique de l'invention, les ouvertures présentent une forme allongée s'étendant parallèlement au bord inférieur de la cloche.

Selon encore une autre caractéristique de l'invention, le bord inférieur de la cloche présente une forme ondulée en direction axiale de sorte que la cloche présente, vu de côté, des lobes en alternance avec des parties échancrées.

Une telle caractéristique permet de favoriser la circulation des aliments tout en réduisant la surface de contact entre la cloche du pied de mixage et le récipient.

L'invention concerne également un appareil électroménager comportant un boîtier renfermant un moteur électrique, caractérisé en ce que le boîtier est accouplé à un pied de mixage tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue de côté d'un mixeur ménager muni d'un pied de mixage selon un mode particulier de réalisation de l'invention ;
- la figure 2 est une vue en perspective du mixeur de la figure 1 ;
- la figure 3 est une vue agrandie du pied de mixage de la figure 1 représenté seul ;
- la figure 4 représente une vue partielle, en perspective, du pied de mixage de la figure 1 sans son bourrelet de protection ;
- la figure 5 est une vue de côté du pied de mixage de la figure 4.

Seuls les éléments nécessaires à la compréhension de l'invention ont été représentés. Pour faciliter la lecture des dessins les mêmes éléments portent les mêmes références d'une figure à l'autre.

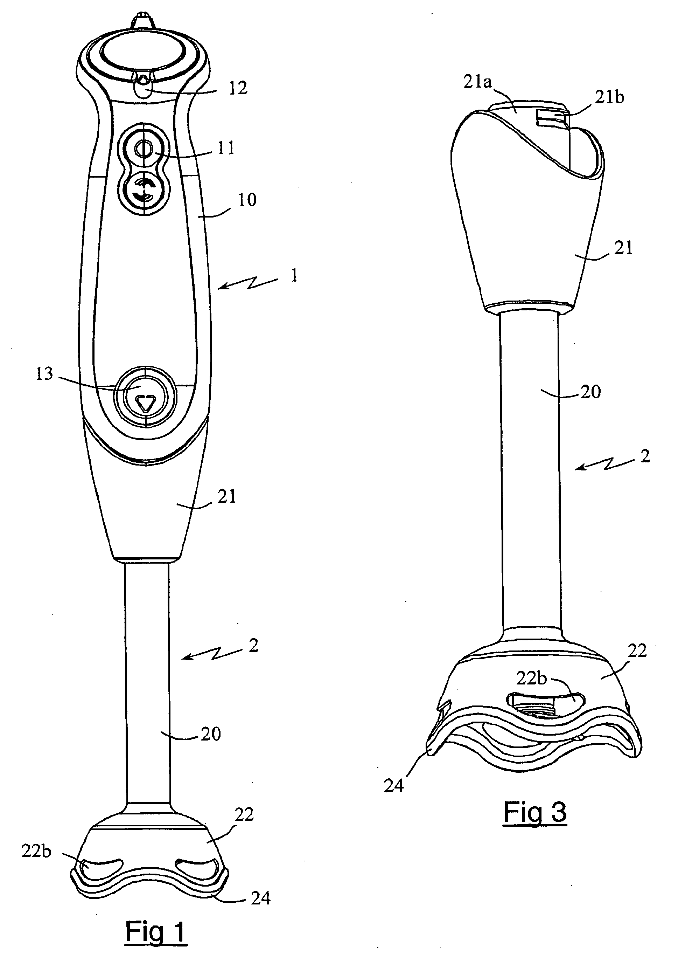

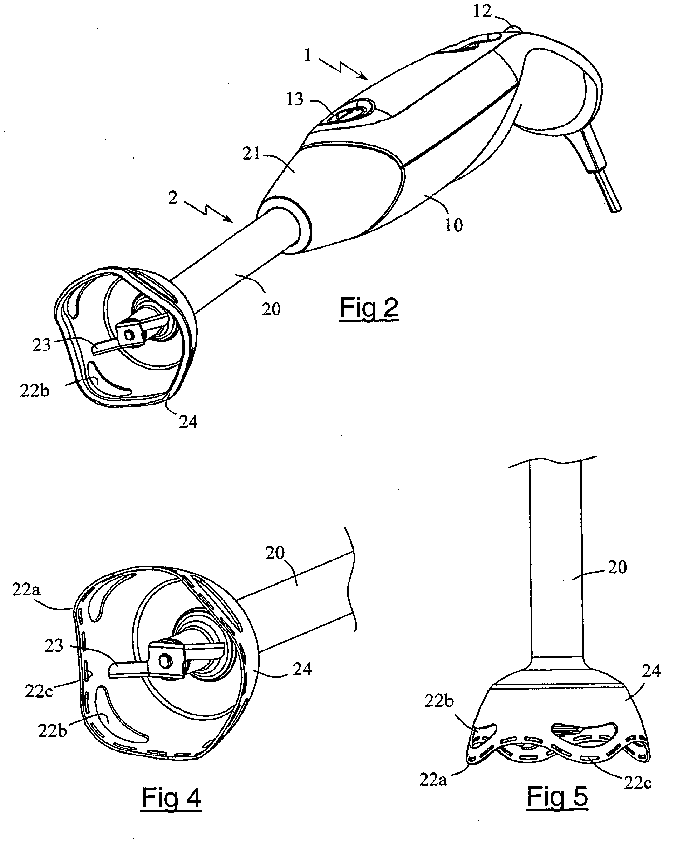

Les figures 1 et 2 représentent un mixeur ménager comportant un boîtier 1 comprenant un corps 10 de forme sensiblement oblongue renfermant, de manière connue en soi, un moteur, non représenté sur les figures. Le moteur est agencé selon l'axe longitudinal du boîtier et possède un arbre de sortie qui est lié à un entraîneur rotatif disposé en regard d'une ouverture pratiquée dans la partie inférieure du boîtier 1. Le boîtier 1 comporte un bouton 11 pour la mise en marche du moteur et une molette 12 permettant de faire varier sa vitesse de rotation.

Sur la partie inférieure du boîtier 1 est monté, de façon amovible, un pied de mixage 2 qui comprend un fût tubulaire 20 en acier inox ayant une partie supérieure comportant une pièce d'accouplement 21 en matière plastique assurant le montage du pied de mixage 2 sur le boîtier 1.

La pièce d'accouplement 21 comporte une forme extérieure fuselée venant dans le prolongement du corps 10 du boîtier 1 et présentant un bord supérieur ondulé de forme complémentaire à la forme extérieure de la partie inférieure du boîtier 1.

Conformément à la figure 3, la pièce d'accouplement 21 comprend également un manchon de connexion 21 a muni d'encoches 21 b qui viennent coopérer avec des languettes d'encliquetage, non représentées sur les figures, portées par le boîtier 1 pour assurer l'immobilisation du pied de mixage 2 sur le boîtier 1. Le pied de mixage 2 peut être désaccouplé du boîtier 1 en appuyant sur un bouton 13 porté par le boîtier 1 permettant de libérer les languettes d'encliquetage des encoches 21 b.

La partie inférieure du pied de mixage comporte une cloche 22 en acier inox renfermant un outil de mixage 23, tel un couteau, solidaire d'un arbre dont l'extrémité supérieure vient s'accoupler avec l'entraîneur rotatif porté par le boîtier 1.

La cloche 22 comporte un bord inférieur 22a ondulé suivant l'axe longitudinal du pied de mixage de sorte que la cloche 22 présente, en vue de côté, des lobes en alternance avec des parties échancrées. Les lobes de la cloche 22 comportent des ouvertures latérales 22b en forme de haricot permettant la circulation des aliments lors de l'utilisation du mixeur.

Plus particulièrement selon l'invention, le bord inférieur 22a de la cloche 22 est recouvert d'un bourrelet de protection 24, ce dernier s'étendant à la fois sur la périphérie intérieure et sur la périphérie extérieure du bord inférieur 22a. Le bourrelet de protection 24 est réalisé dans un matériau de faible dureté qui est avantageusement rapporté sur la cloche 22 par surmoulage. Le matériau du bourrelet de protection est par exemple un matériau plastique tel que du polyamide chargé à 15% de fibres de verre.

Dans le mode de réalisation particulier représenté aux figures 4 et 5, la cloche 22 présente des trous allongés 22c s'étendant en bordure du bord inférieure de la cloche 22, dans la zone recouverte par le bourrelet de protection 24. Ces trous 22c permettent de renforcer l'accrochage du bourrelet de protection 24 sur la cloche 22 en permettant, lors du surmoulage du bourrelet de protection, la formation de ponts reliant les deux faces du bourrelet de protection 24 disposées de part et d'autre du bord inférieur de la cloche 22.

Un tel pied mixage en acier inoxydable présente l'avantage de pouvoir être utilisé dans un récipient muni d'un revêtement fragile, tel un revêtement anti-adhésif, sans risque de détérioration du revêtement. En effet, le bourrelet de protection est la partie venant prioritairement au contact du récipient lors de l'utilisation du mixeur pour la préparation des aliments. Or, ce bourrelet de protection est de faible dureté, ce qui le rend non agressif vis-à-vis d'un revêtement fragile tel qu'un revêtement anti-adhésif. Le pied de mixage selon ce mode particulier de réalisation de l'invention présente par ailleurs l'avantage de conserver les propriétés d'aspect et de rigidité d'un pied de mixage en inox.

Bien entendu, l'invention est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la surface de la cloche de protection destinée à être recouverte par le bourrelet de protection peut présenter d'autres formes d'aspérités, telles des stries réalisées parallèlement au bord inférieur, permettant de favoriser l'accrochage du bourrelet de protection réalisé par surmoulage.

Dans une autre variante de réalisation non représenté, le bourrelet de protection peut être constitué d'une pièce fabriquée indépendamment qui est ensuite collée sur le bord inférieur de la cloche.

Dans encore une autre variante de réalisation, le bourrelet de protection peut être une pièce fabriquée indépendamment dans un matériau plastique relativement rigide qui est rapporté sur la cloche en étant rendu solidaire de cette dernière au moyen d'ergots d'encliquetage coopérant avec des évidements réalisés sur la surface de la cloche.

Enfin, dans une variante de réalisation, le pied de mixage peut être réalisé dans d'autres matières que de l'inox, par exemple un matériau plastique rigide, la cloche et le fût du pied de mixage pouvant également être réalisés dans deux matériaux de nature différente.

## Revendications

1. Pied de mixage (2) destiné à s'accoupler avec un boîtier renfermant un moteur, le pied de mixage (2) comprenant un fût (20) dont la partie inférieure comporte une cloche (22) renfermant un outil de mixage (23) entraîné en rotation par ledit moteur, **caractérisé en ce que** la cloche (22) comporte un bord inférieur (22a) recouvert d'un élément de protection (24) réalisé dans un matériau dont la dureté est inférieure à la dureté du matériau formant la cloche (22).

2. Pied de mixage selon la revendication 1, **caractérisé en ce que** la cloche (22) est en acier inox.

3. Pied de mixage selon la revendication 2, **caractérisé en ce que** le fût (20) est en acier inox.

4. Pied de mixage selon l'une quelconque .des revendications 1 à 3, **caractérisé en ce que** l'élément de protection (24) est en matière plastique

5. Pied de mixage selon la revendication 4, **caractérisé en ce que** l'élément de protection (24) est surmoulé sur la cloche (22).

6. Pied de mixage selon l'une quelconque des revendications 1 à 5, **caractérisé en ce que** la partie de la cloche (22) recouverte par l'élément de protection (24) comporte un état de surface spécifique favorisant l'accrochage de l'élément de protection (24).

7. Pied de mixage selon l'une quelconque des revendications 5 ou 6, **caractérisé en ce que** la partie de la cloche (22) recouverte par l'élément de protection (24) comporte des ouvertures (22c).

8. Pied de mixage selon la revendication 7, **caractérisé en ce que** lesdites ouvertures (22c) présentent une forme allongée s'étendant parallèlement au bord inférieur (22a) de la cloche (22).

9. Pied de mixage selon l'une quelconque des revendications 1 à 8, **caractérisé en ce que** le bord inférieur (22a) de la cloche présente une forme ondulée en direction axiale de sorte que la cloche (22) présente, vu de côté, des lobes en alternance avec des parties échancrées.

10. Appareil électroménager comportant un boîtier (1) renfermant un moteur électrique, **caractérisé en ce que** ledit boîtier est accouplé à un pied de mixage (2) selon l'une quelconque des revendications 1 à 9.

## Claims

1. A blender attachment (2) for coupling with a housing containing a motor, the blender attachment (2) comprising a shank (20) with a bottom portion comprising a bell (22) containing a mixer tool (23) driven in rotation by said motor, the attachment being **characterized in that** the bell (22) has a bottom edge (22a) covered in a protector element (24) made of a material presenting hardness that is less than the harness of the material forming the bell (22).

2. A blender attachment according to claim 1, **characterized in that** the bell (22) is made of stainless steel.

3. A blender attachment according to claim 2, **characterized in that** the shank (20) is made of stainless steel.

4. A blender attachment according to any one of claims 1 to 3, **characterized in that** the protector element (24) is made of plastics material.

5. A blender attachment according to claim 4, **characterized in that** the protector element (24) is overmolded on the bell (22).

6. A blender attachment according to any one of claims 1 to 5, **characterized in that** the bell portion (22) covered by the protector element (24) has a specific surface state encouraging bonding of the protector element (24).

7. A blender attachment according to claim 5 or claim 6, **characterized in that** the bell portion (22) covered by the protector element (24) includes openings (22c).

8. A blender attachment according to claim 7, **characterized in that** said openings (22c) are elongate in shape, extending parallel to the bottom edge (22a) of the bell (22).

9. A blender attachment according to any one of claims 1 to 8, **characterized in that** the bottom edge (22a) of the bell presents a shape that undulates in the axial direction such that seen from the side the bell (22) presents lobes alternating with setback portions.

10. A household electrical appliance comprising a housing (1) containing an electric motor, the appliance being **characterized in that** said housing is coupled to a blender attachment (2) according to any one of claims 1 to 9.

## Patentansprüche

1. Stabmixer (2) zum Ankoppeln an ein Gehäuse, das einen Motor umschließt, wobei der Stabmixer (2) einen Schaft (20) umfasst, dessen unterer Teil eine Glocke (22) aufweist, die ein Mixwerkzeug (2) umschließt, das vom Motor in Drehung angetrieben ist, **dadurch gekennzeichnet, dass** die Glocke (22) einen unteren Rand (22a) aufweist, der von einem Schutzelement (24) überdeckt ist, das aus einem Material besteht, dessen Festigkeit geringer als die Festigkeit des Materials ist, aus dem die Glocke (22) besteht.

2. Stabmixer nach Anspruch 1, **dadurch gekennzeichnet, dass** die Glocke (22) aus nicht rostendem Stahl besteht.

3. Stabmixer nach Anspruch 2, **dadurch gekennzeichnet, dass** der Schaft (20) aus nicht rostendem Stahl besteht.

4. Stabmixer nach einem der Ansprüche 1 bis 3, **dadurch gekennzeichnet, dass** das Schutzelement (24) aus Kunststoff besteht.

5. Stabmixer nach Anspruch 4, **dadurch gekennzeichnet, dass** das Schutzelement (24) auf die Glocke (22) aufgeformt ist.

6. Stabmixer nach einem der Ansprüche 1 bis 5, **dadurch gekennzeichnet, dass** der vom Schutzelement (24) überdeckte Teil der Glocke (22) einen spezifischen Oberflächenzustand aufweist, der das Anhaften des Schutzelements (24) begünstigt.

7. Stabmixer nach einem der Ansprüche 5 oder 6, **dadurch gekennzeichnet, dass** der vom Schutzelement (24) überdeckte Teil der Glocke (22) Öffnungen (22c) aufweist.

8. Stabmixer nach Anspruch 7,**dadurch gekennzeichnet, dass** die Öffnungen (22c) eine längliche Form aufweisen,

9. Stabmixer nach einem der Ansprüche 1 bis 8, **dadurch gekennzeichnet, dass** der untere Rand (22a) der Glocke in axialer Richtung eine gewellte Form aufweist, so dass, von der Seite gesehen, die Glocke (22) einander alternierende Lappen und Aussparungen aufweist.

10. Elektrisches Haushaltsgerät mit einem Gehäuse (1), das einen Elektromotor umschließt, **dadurch gekennzeichnet, dass** das Gehäuse an einem Stabmixer (2) nach einem der Ansprüche 1 bis 9 angekoppelt ist.
